# EUROPEAN PATENT SPECIFICATION

(11) **EP 0 493 902 B1**
(45) Date of publication and mention of the grant of the patent: **13.03.1996**
(21) Application number: 91311418.7
(22) Date of filing: 09.12.1991
(51) Int. Cl.: G11B 5/60, G11B 5/31

(54) **Magnetic head slider and method for making same**
Magnetkopfgleitstück und sein Herstellungsverfahren
Glisseur pour tête magnétique et procédé de fabrication

(30) Priority: 27.12.1990 US 634671; 27.12.1990 US 634834
(43) Date of publication of application: 08.07.1992
(73) Proprietor: International Business Machines Corporation, Armonk, N.Y. 10504 (US)
(72) Inventor: Grill, Alfred, White Plains, New York 10605 (US); Horng, Cheng Tzong, San Jose, California 95120 (US); Meyerson, Bernard Steele, Yorktown Heights, New York 10598 (US); Patel, Vishnubhai Vitthalbhai, Yorktown, New York 10598 (US); Russak, Michael Allen, Brewster, Yorktown 10509 (US); Chang, Henry Chinlin, San Jose, California 95120 (US); Chen, Mao-Min, San Jose, California 95120 (US); Schwenker, Robert Otto, San Jose, California 95120 (US)
(74) Representative: Burt, Roger James, Dr.

(56) References cited:
- EP-A- 0 241 371
- EP-A- 0 248 556
- EP-A- 0 350 412
- WO-A-88/06334
- PATENT ABSTRACTS OF JAPAN vol. 6, no. 59 (P-110)(937) 16 April 1982 & JP-A-56 169 264
- DATABASE WPIL Section Ch, Week 9014, Derwent Publications Ltd., London, GB; Class L02, AN 90-100281 & DE-A-3 832 692

## Description

### Field of the Invention

This invention relates to magnetic head sliders for data storage devices, and to the method for making such magnetic head sliders.

### Background of the Invention

Thin film magnetic heads have been in use for many years, and these heads are conventionally formed on a substrate in a series of rows each having a plurality of heads. Once the heads are fabricated, the substrate is cut to form a row of heads in a side-by-side orientation. While still in a row format, the thin film magnetic heads are lapped to a predetermined throat height dimension which is very critical to head performance. Once the desired lapped throat height dimension is achieved, this should not be affected by subsequent processing of the head.

One of the subsequent steps in the processing of the heads is the production of a pattern of rails on the lapped surface to form an air bearing surface (ABS). The desired pattern of rails on the ABS has gotten progressively more complex in shape so that a dry processing technique such as an etching progress is generally used. Protection of the thin film magnetic head during the etching process requires a protective coating which is generally thick and which is removed after completion of the etching process.

The row of magnetic heads is then separated into individual magnetic head sliders, and, in operation, the slider "flies" with the ABS and the attached thin film magnetic head a small uniform spacing, usually less than 250 nm (ten microinches), from the magnetic recording medium. In the normal operation of a magnetic disk recording system, the head sometimes comes into inadvertent contact with the magnetic recording medium.

In the prior art various protective layers were deposited on the magnetic head slider to protect the ABS from mechanical wear caused by contact between the head and magnetic recording medium during flying.

For example, U.S. patent Re 32,464 discloses a magnetic recording system in which a rigid magnetic recording disk has a protective layer of carbon to protect it from wear. The magnetic transducer is coated with carbon, preferably in the form of graphite, to provide a low friction wear resistant contacting surface with the recording medium. The thickness of the coating is between 50 and 250 nm (2 and 10 microinches).

IBM TDB, December, 1982, p. 3173 describes a magnetic head slider having a protective layer of silicon carbide or diamond-like carbon. The thickness of the protective layer is within the range of 50 to 100 nm (500 to 1000 angstroms).

IBM TDB, June, 1976, p. 351 describes a magnetic head having a protective layer of silicon nitride in layers of about 20 to 500 nm (200 to 5000 angstroms).

Unexamined Japanese patent application, 58-150,122, published September 6, 1983, describes a magnetic head having a thin film of a material having a lubricating effort on the surface of the head which faces the magnetic recording medium. A list of suitable materials is given which includes carbon, and the thickness of the film is within the range of 20 to 80 nm (200 to 800 angstroms).

U.S. patent 4,130,847 describes a magnetic head slider having a protective coating over at least the magnetic head. The coating is produced in a recess within the slider body to a thickness as small as 250 nm (10 microinches).

German patent application DE 3,714,787, published November 24, 1988, describes a storage system in which the magnetic disk surface is coated with friction reducing carbon and the rails of the magnetic head slider are coated with a friction reducing lubricant comprising carbon. The thickness of the carbon is 1 to 100 nm (10 to 1000 angstroms).

Patent application serial number PCT/US88/00438, published August 25, 1988, discloses a magnetic head slider in which a magnetic head is built within one of the side rails. A wear layer is provided over the slider which comprises a 5 nm (50 angstroms) thick chromium layer and a 20 nm (200 angstroms) thick carbon layer. Either of the two components of the wear layer can be omitted. It is known from DE-A-3832692 that a Si-layer has high adhesion to hydrogenated carbon layers and to alumina ceramic. Carbonaceous films with hydrogen are known in Combination with tapes and films (EP-A-248556).

None of the references disclose a protective layer for a magnetic head slider which is effective to protect a thin film magnetic head not only during the fabrication process but also in the normal operation of the magnetic head slider in a magnetic disk storage system.

### Disclosure of the Invention

Accordingly, the invention provides a magnetic head slider having an air bearing surface with a patterned area thereon, said patterned area having a protective coating, said slider being characterised in that said coating comprises an adhesion layer less than 50 nm in thickness and a layer of amorphous hydrogenated carbon.

The thin protective coating on a magnetic head slider protects the magnetic head not only in the normal operation of the magnetic head slider in a magnetic recording system but also during the fabrication process. Typically, the magnetic head slider is provided with at least two rails on its air bearing surface, the rails having the protective coating on their surface.

Preferably the adhesion layer comprises silicon between 1-5 nm (10 to 50 angstroms) thick, and the layer of amorphous hydrogenated carbon is between 5 and 100 nm thick. In a preferred embodiment the thickness of the protective coating is 25 nm (250 angstroms) or less. The protective coating can with advantage further comprise a masking layer. In a preferred embodiment this masking layer is formed from SiOₓ and is approximately 5 nm thick.

The invention also provides a method for making a magnetic head slider for a magnetic recording system, said slider having an air bearing surface, said method comprising the steps of: depositing a protective coating on said air bearing surface of said slider, said protective coating comprising an adhesion layer less than 50 nm in thickness and a layer of amorphous hydrogenated carbon; forming a pattern of at least one rail on said air bearing surface by removing material from said air bearing surface to a chosen depth in areas of said air bearing surface other than said rail(s); and retaining said protective coating on said rail(s).

The air bearing surface is formed to provide a chosen magnetic head dimension. The protective coating is retained on the rails so that during normal operation of the magnetic head slider in a magnetic recording system, the magnetic head slider is protected from wear and corrosion damage. A preferred method of forming the pattern of rails comprises an etching process, such as reactive ion etching.

In one preferred approach the depositing step includes depositing a masking layer. The depositing step can also include depositing a second thicker layer of amorphous hydrogenated carbon, whereby the method further comprises the step of subjecting the patterned slider to an oxygen etching process to remove said thicker layer of amorphous hydrogenated carbon, and to change the surface characteristics of the masking layer.

### Brief Description of the Drawings

Fig. 1 is a plan view of a partial row of thin film magnetic heads.
Fig. 2 is a bottom plan view of one embodiment of a magnetic head slider.
Fig. 3 is a bottom plan view of another embodiment of a magnetic head slider.
Figs. 4A-D comprise views of a partial row of thin film magnetic heads showing successive steps in the process for making a magnetic head slider with a two-layer protective coating;
Fig. 5 is a plan view of the trailing end of one embodiment of a magnetic head slider having a two-layer protective coating.
Fig. 6 is a plan view of the trailing end of another embodiment of a magnetic head slider having a two-layer protective coating.
Fig. 7 is a graph showing the hydrogen concentration in the amorphous hydrogenated carbon layer as a function of sputtering power.
Figs. 8A-D are analogous to Figs 4A-D and comprise views of a partial row of thin film magnetic heads showing successive steps in the process for making a magnetic head slider with a three-layer protective coating;
Fig. 9 is a plan view analogous to Fig 5 of the trailing end of one embodiment of a magnetic head slider having a three-layer protective coating.
Fig. 10 is a plan view analogous to Fig 6 of the trailing end of another embodiment of a magnetic head slider having a three-layer protective coating.

### Detailed Description

The present invention relates to a magnetic recording system which includes a magnetic head slider. The slider supports a thin film magnetic read/write head, and the head is formed by depositing layers of magnetic material, electrically conductive material, and electrically insulating material to form the well known pole pieces and magnetic gap necessary for the transducing function with a magnetic coating on a magnetic recording medium. During fabrication, a plurality of thin film magnetic heads are deposited onto a wafer which is then cut to form rows of transducers with the transducers set in a side-by-side relationship. The thin film magnetic heads are lapped to a predetermined throat height dimension which is very critical to head performance. A pattern of rails is produced on the lapped surface to form an air bearing surface (ABS), and the row is separated into individual magnetic head sliders.

Each slider is mounted onto a suspension system which in turn is mounted onto an accessing system for locating the magnetic heads onto tracks formed by the magnetic heads when writing onto a rotating magnetic disk, for example. During normal operation the slider flies at a small spacing, in the range of 50 to 250 nm (a few microinches), over the magnetic recording medium.

It has been discovered that the prior art process of forming the ABS can produce a significant loss in yield in the manufacturing process due to corrosion damage to the sensitive head components. This has been found to be due in some cases to insufficient coverage of critical components during the etching operation and in other cases to damage to some head components during the removal of the masking layer used to protect the head during the etching process.

It has also been discovered that prior art protective layers deposited after ABS formation have not met the lifetime requirements of current thin film magnetic heads in operation. This degradation of head/slider life in operation has been discovered to be due, in part, to mechanical wear caused by the inadvertent contact between the head and magnetic recording medium during flying. In addition to the mechanical wear, the thin film magnetic heads contain a variety of materials that are attacked by the normal constituents of the atmosphere. Prolonged exposure of the head to the atmosphere can result in degradation of the head performance due to oxidation and resulting in corrosion of the head materials.

It was unexpectedly observed, according to the present invention, that a protective coating comprising at least a thin adhesion layer and a thin layer of amorphous hydrogenated carbon is effective to protect the thin film magnetic head from damage not only in the processing to form the pattern of rails on the ABS, but also during normal operation of the head in a magnetic disk file. This was unexpected since in prior art processes, the protective coating used during processing was made very thick since it was progressively eroded during the etching process for forming the ABS. On the other hand, the total thickness of the protective layer on the slider during operation is constrained to a very thin dimension since its thickness adds directly to the spacing between the thin film magnetic head and the magnetic recording medium. In a specific embodiment a thickness of amorphous hydrogenated carbon as little as 5 nm (50 angstroms) thick was shown to produce significant improvement to both manufacturing yield and lifetime of the head in operation.

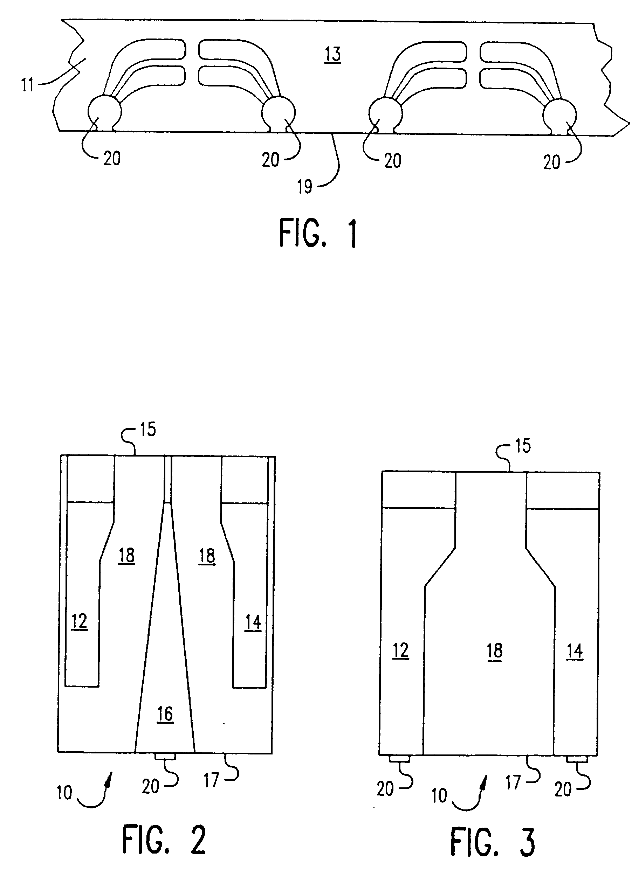

Referring to Fig. 1, there is shown a view of a partial row 11 having a plurality of thin film magnetic heads 20. The row 11 is lapped on surface 19 so that each of the thin film magnetic heads 20 has a chosen throat height. A pattern of rails is produced on surface 19 to form an air bearing surface (ABS), and the row is then separated into individual magnetic head sliders 10.

The pattern of rails may be as shown in Fig. 2 in which a pair of outside rails 12, 14 is produced along with a center rail 16. The side rails extend from the leading end 15 of the slider 10 part way to the trailing end 17, while the center rail extends from the leading end 15 to the trailing end 17. The thin film magnetic head 20 is located at the trailing end of the center rail 16.

The pattern of rails may also be as shown in Fig. 3, and this embodiment corresponds to the arrangement shown in row 11 of Fig. 1. In this case the outside rails 12, 14 extend from the leading end 15 of the slider 10 to the trailing end 17. The thin film magnetic heads 20 are located at the trailing end 17 of the side rails 12, 14.

The rail pattern produced in individual sliders 10 is at the same level on the ABS 19 as the lapped pole pieces of the thin film magnetic heads 20, and the remainder is a recessed area 18 which is recessed from the ABS 19 by a distance chosen to produce a combined pressure profile with a moving magnetic recording medium so that the slider 10 flies at the chosen flying height or spacing over the magnetic recording medium.

After the heads are lapped to the selected throat height and before the rail pattern is produced on the ABS, a protective coating is produced over the ABS. This protective coating protects the thin film magnetic heads in three ways. The protective coating is effective to protect the thin film magnetic bead during the processing of the head/slider to form the pattern of rails on the ABS. The protective coating is also effective, during normal operation of the head in a magnetic disk file, for example to protect the head and the ABS from mechanical wear caused by inadvertent contact between the head/slider and the magnetic recording medium during flying. In addition to mechanical wear, the protective coating also is effective to protect the variety of materials in the magnetic head that are attacked by the normal constituents of the atmosphere from oxidation and corrosion in normal operation of the system.

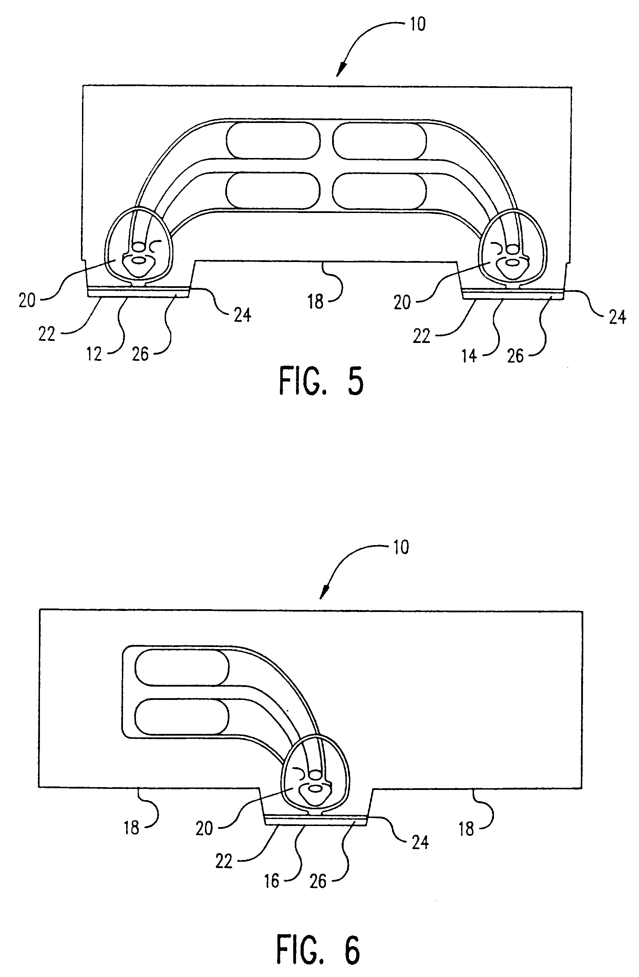

In a first embodiment the protective coating 22 (Figs. 5 and 6) comprises two layers, the first layer being a suitable adhesion layer 24 and the second layer being a thin layer of amorphous hydrogenated carbon 26. In one specific embodiment the adhesion layer 24 is silicon about 5 nm (50 angstroms) thick, and the total thickness of the protective coating is about 25 nm (250 angstroms). In another specific embodiment the adhesion layer 24 is silicon about 3 nm (30 angstroms) thick and the total thickness of the protective coating is about 12.5 nm (125 angstroms).

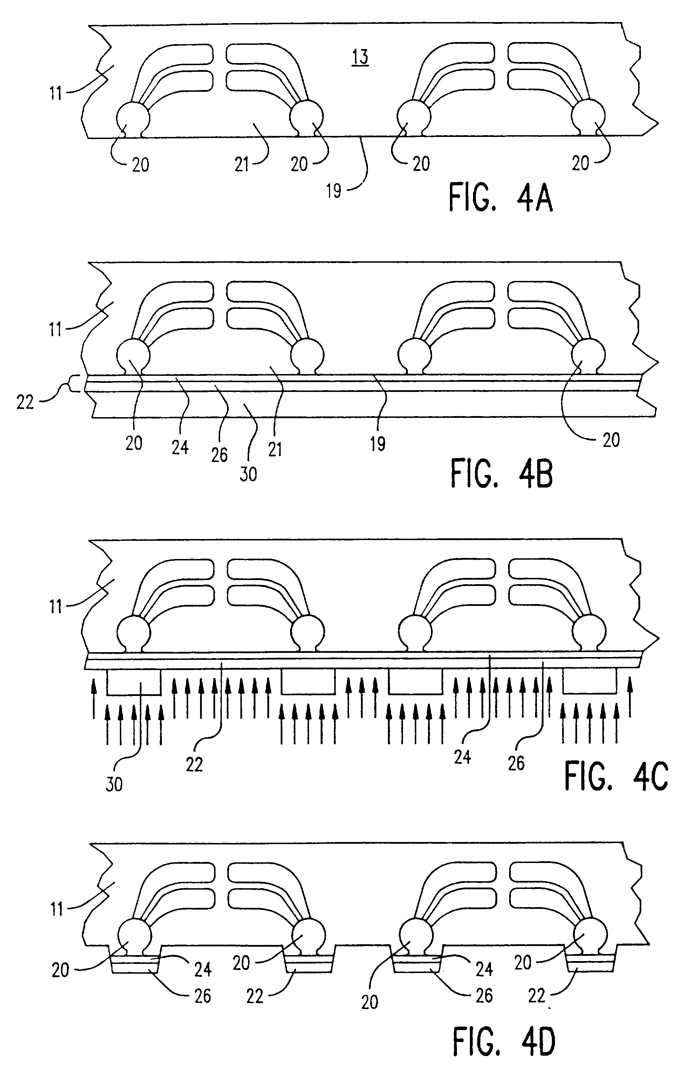

The process for making such a magnetic head slider will be described by reference to Fig. 4. The process starts with either a single slider 10 or preferably a substrate 13 comprising a row 11 having a plurality of sliders in a side-by-side relationship. The thin film magnetic heads 20 are fabricated on a first surface 21 of the row 11, and first surface 21 is at substantially ninety degrees to the ABS 19. ABS 19 is lapped until the thin film magnetic heads reach a predetermined throat height. The lapping can be by any suitable technique such as that described in commonly assigned U.S. patent 4,912,883, for example. Alternatively, should the thin film magnetic heads 20 include a magnetoresistive (MR) read transducer, the lapping can be as described in commonly assigned U.S. patent 4,914,868 in which the ABS is lapped until the MR read transducer reaches a chosen MR element height.

The lapped row of thin film magnetic heads 20 is shown in Fig. 4A. The protective coating 22 is then deposited over the ABS 19 in two layers (Fig. 4B) comprising an adhesion layer 24 and a layer of amorphous hydrogenated carbon 26. In a specific embodiment, adhesion layer 24 comprises a deposited layer of amorphous silicon. Typically, the silicon is deposited to a thickness of about 1-5 nm (10-50 angstroms), although a possible range is from a monolayer to about 50 nm (500 angstroms). However, from the standpoint of limiting the increase in spacing between the magnetic head and magnetic recording medium, the thinner layer (less than 5 nm (50 angstroms)) of silicon is preferred.

The layer of hydrogenated amorphous carbon 26 is deposited to a thickness of about 5-100 nm (50-1000 angstroms). A layer of hydrogenated amorphous carbon 26 as little as 5 nm (50 angstroms) thick has been shown to provide a significant improvement in both wear and corrosion rates. However, a thicker layer is preferable since it provides increased protection, so the thickness is chosen based on the permissible increase in spacing between the magnetic head and the magnetic recording medium.

The two layers of the protective coating 22 can be deposited by any suitable technique such as plasma assisted chemical vapor deposition, ion beam or laser techniques. The preferred technique is by the use of a DC biased substrate in an RF plasma deposition apparatus. The film properties of the carbon layer 26 can be controlled by the appropriate choice of deposition parameters. These include controlling temperature and bias of the parts during deposition, RF power, hydrogen content in the argon sputtering gas, sputtering gas pressure, and target to substrate spacing. The deposition parameters of the amorphous hydrogenated carbon layer 26 determine the characteristics of the layer since hydrogen content, density, hardness, and optical density are a function of the sputtering power, the per cent hydrogen in the argon carrier gas and the pressure.

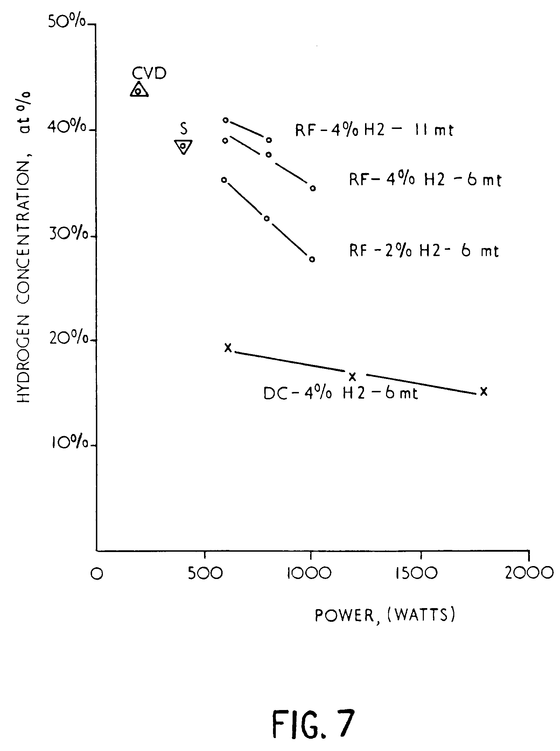

Fig. 7 shows the hydrogen concentration in the amorphous hydrogenated carbon layer 26 as a function of sputtering power, percent hydrogen, and pressure. Note that, by the use of DC magnetron sputtering, a hydrogen concentration within the range of 15 to 19 per cent can be achieved for that specific embodiment. Note that the three examples given for RF magnetron sputtering produce a hydrogen concentration within the range of about 28-40 percent. Note that in a specific embodiment of chemical vapor deposition (CVD), the hydrogen concentration was about 43 per cent, and for a further specific embodiment of a sputtering system S the hydrogen concentration was about 38 per cent.

For a specific embodiment, RF magnetron sputtering was chosen for deposition of the amorphous hydrogenated carbon layer since a hydrogen concentration within the range of 28 to 40 per cent produced the best combination of characteristics for density, hardness, optical density, resistivity, breakdown voltage and the best corrosion protection of any of the other deposition techniques that were tried.

Once the protective coating 22 is deposited over the row 11, a thick layer of a patternable material 30 is deposited over the row 11. The preferred material is a photoresist material, and this material is exposed through an appropriate mask (not shown) to produce a negative image of the desired rail pattern in the patternable material layer 30. The patternable material is developed to produce a mask in the image of the desired rail pattern.

The masked row 11 is then subjected to a suitable etching process (Fig. 4C) such as reactive ion etching, sputter etching, ion milling, or laser etching, for example, as depicted by the arrows in Fig. 4C. The exposed part of protective coating 22 is etched away and the ABS 19 of row 11 is then etched to a depth chosen to provide the desired flying characteristics for the slider 10 in normal operation with a magnetic recording medium.

The remainder of the patternable material 30 is then removed (Fig. 4D) by the use of a suitable solvent, for example, to produce a row 11 of sliders. The remaining part of the protective coating 22 covers the rails of the sliders 10 and has protected the slider during the slider rail fabrication process. The sliders 10 in the row 11 are then parted to form individual sliders as shown in Figs. 5 and 6. The protective coating also protects the thin film magnetic head 20 and the ABS from wear and corrosion damage during normal operation of the slider 10 in a magnetic recording system.

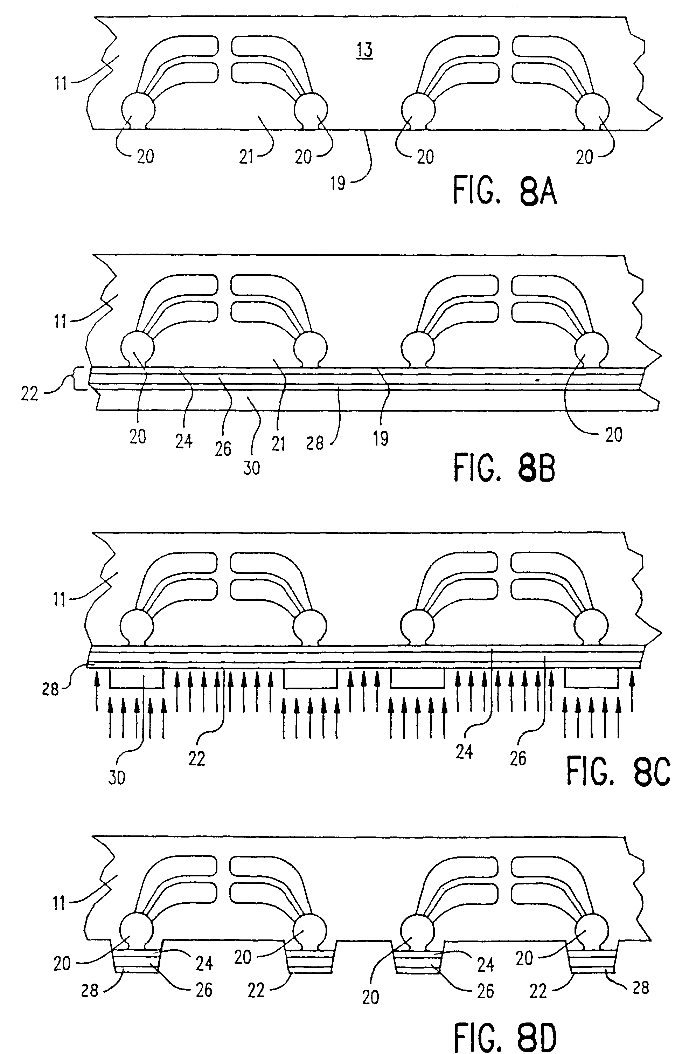

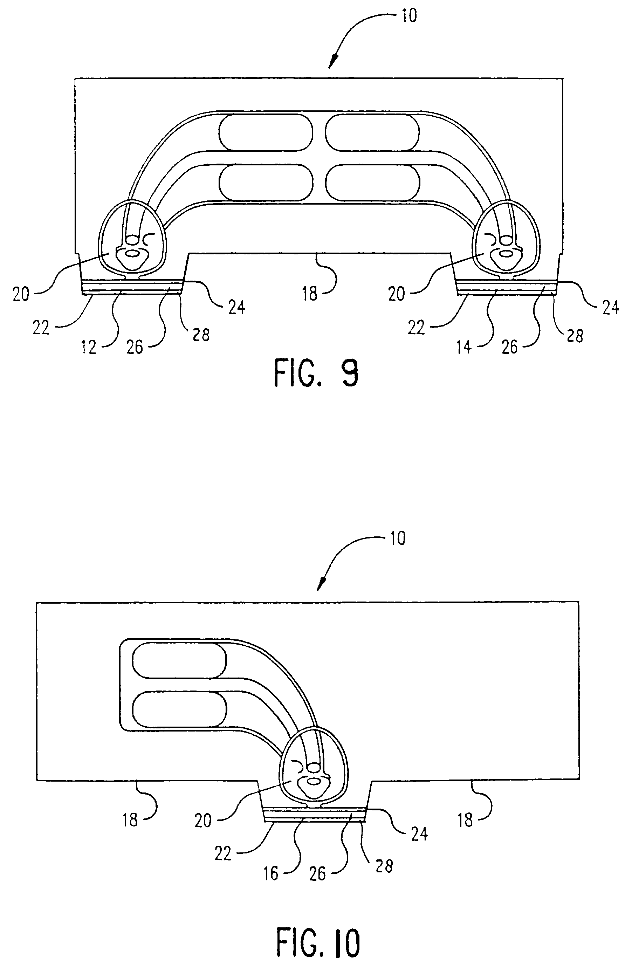

In a second embodiment of the present invention, the protective coating further comprises a thin masking layer, as shown in Figures 8 to 10 (these correspond to Figures 4 to 6 for the two-layer embodiment). This masking layer can be deposited in the same way as the other layers of the protective coating (in fact, the data for Figure 7 was obtained from a 3-layer coating). The method for making this second embodiment is analogous to that for the first embodiment (the masking layer is deposited last), and so will not be repeated. Again, it is preferred that the total thickness of the protective layer is no more than about 250 nm. The material forming masking layer 28 is chosen so that it does not react with the material chosen for removing the layer of patternable material 30. In a specific embodiment, masking layer 28 is formed of silicon. The silicon does not react with the solvent chosen to remove the remainder of photoresist layer 30. The protective coating 22 is then subjected to an oxygen plasma etching treatment and at least the exposed surface of the silicon masking layer 28 reacts with the oxygen during the oxygen plasma etching so that a silicon compound SiOₓ is formed. The compound is referred to as SiOₓ since analysis has shown that it is not strictly SiO₂, so some other oxides are formed with silicon and the resulting SiOₓ layer provides an excellent protective layer since it is tough and is not reactive with any of the normal components of the atmosphere. The SiOₓ layer also serves as an etch stop so that none of the underlying layers of protective coating 22 are affected during the oxygen plasma etching operation.

In a third embodiment, the protective coating 22 comprises four layers. The four layers comprise a thin adhesion layer, a thin amorphous hydrogenated carbon layer, a thin masking layer, and a thick amorphous hydrogenated carbon overlayer. The process for this embodiment has the same steps as before, and the thick carbon overlayer provides extra protection against damage to the thin film magnetic head during the etching operation. However, during the oxygen plasma etching operation, the thick carbon overlayer reacts with the oxygen to form CO and CO₂ and therefore this overlayer is removed. The resulting structure on the slider 10 is substantially the same as that described above since the reaction between the silicon etch stop layer 28 and the oxygen is substantially the same.

A magnetic head slider has been disclosed having a thin protective coating thereon which protects the magnetic head from damage not only during fabrication but also in normal operation in a magnetic disk file, for example, and the protective coating comprises a thin adhesion layer, a thin layer of amorphous hydrogenated carbon, and optionally a further masking layer. This structure is in contrast to prior art techniques in which a thick protective coating was used during fabrication and then removed, and a thin protective coating was deposited after fabrication of the slider to serve as a protective coating during usage. The present invention produces greater manufacturing yields and a longer lifetime in operation in a magnetic recording system.

## Claims

1. A magnetic head slider (10) having an air bearing surface (19) with a patterned area (12, 14) thereon, said patterned area having a protective coating (22),
said slider being characterised in that said coating comprises an adhesion layer (24) less than 50 nm in thickness and a layer of amorphous hydrogenated carbon (26).

2. The magnetic head slider of claim 1 wherein said patterned area includes at least one rail (12).

3. The magnetic head slider of claim 1 or 2 wherein said adhesion layer comprises silicon.

4. The magnetic head slider of any preceding claim wherein the thickness of said adhesion layer is between 1-5 nm (10 - 50 angstroms).

5. The magnetic head slider of any preceding claim wherein the thickness of said layer of amorphous hydrogenated carbon is between 5 and 100 nm.

6. The magnetic head slider of any preceding claim wherein the thickness of said protective coating is less than 25 nm (250 angstroms).

7. The magnetic head slider of any preceding claim wherein said protective coating further comprises a masking layer (28) deposited on the hydrogenated carbon layer (26).

8. The magnetic head slider of claim 7 wherein the masking layer is a compound of silicon.

9. The magnetic head slider of claim 8, wherein said compound of silicon is SiOₓ.

10. The magnetic head slider of any of claims 7 to 9, wherein the masking layer is approximately 5 nm thick.

11. A data storage device including a magnetic head slider according to any preceding claim.

12. A method for making a magnetic head slider (10) for a magnetic recording system, said slider having an air bearing surface (19),
said method comprising the steps of:
depositing a protective coating (22) on said air bearing surface of said slider, said protective coating comprising an adhesion layer (24) less than 50 nm in thickness and a layer of amorphous hydrogenated carbon (26);
forming a pattern of at least one rail (12, 14) on said air bearing surface by removing material from said air bearing surface to a chosen depth in areas (18) of said air bearing surface other than said rail(s); and
retaining said protective coating on said rail(s).

13. The method for making a magnetic head slider according to claim 12 wherein the thickness of said adhesion layer is between 1-5 nm (10 - 50 angstroms).

14. The method for making a magnetic head slider according to claim 11 or 12 wherein the thickness of said layer of amorphous hydrogenated carbon is between 5 and 100 nm (50-1000 angstroms).

15. The method for making a magnetic head slider according to any of claims 11 to 13, wherein said adhesion layer comprises silicon.

16. The method for making a magnetic head slider according to any of claims 11 to 14 wherein the thickness of said protective coating is less than 25 nm (250 angstroms).

17. The method for making a magnetic head slider according to any of claims 11 to 15 wherein said step of forming a pattern of rails comprises an etching process.

18. The method for making a magnetic head slider according to claim 16 wherein said etching process comprises reactive ion etching.

19. The method for making a magnetic head slider according to any of claims 11 to 17, wherein said depositing step includes further depositing a masking layer (28) on the hydrogenated carbon layer.

20. The method for making a magnetic head slider according to claim 18, further comprising the step of subjecting the patterned slider to an oxygen etching process to change the surface characteristics of the masking layer.

21. The method for making a magnetic head slider according to claim 19, wherein said depositing step includes further depositing a second layer of amorphous hydrogenated carbon on the masking layer, the second layer being thicker than the first layer of amorphous hydrogenated carbon (26), said thicker layer of amorphous hydrogenated carbon being removed by the oxygen etching process.

## Patentansprüche

1. Ein Magnetkopfgleitstück (10) mit einer Luftlagerfläche (19) mit einem darauf befindlichen strukturierten Bereich (12, 14), wobei der genannte strukturierte Bereich mit einer Schutzschicht (22) versehen ist,
wobei das genannte Gleitstück dadurch gekennzeichnet ist, daß die genannte Beschichtung eine unter 50 nm dicke Adhäsionsschicht und eine Schicht aus amorphem hydriertem Kohlenstoff (26) umfaßt.

2. Das Magnetkopfgleitstück nach Anspruch 1, bei dem der genannte strukturierte Bereich mindestens eine Schiene (12) umfaßt.

3. Das Magnetkopfgleitstück nach Anspruch 1 oder 2, bei dem die genannte Adhäsionsschicht Silizium enthält.

4. Das Magnetkopfgleitstück nach einem jeden der vorangehenden Ansprüche, bei dem die Dicke der genannten Adhäsionsschicht zwischen 1-5 nm (10-50 Ångström) liegt.

5. Das Magnetkopfgleitstück nach einem jeden der vorangehenden Ansprüche, bei dem die Dicke der genannten Schicht aus amorphem hydriertem Kohlenstoff zwischen 5 und 100 nm liegt.

6. Das Magnetkopfgleitstück nach einem jeden der vorangehenden Ansprüche, bei dem die Dicke der genannten Schutzschicht unter 25 nm (250 Ångström) liegt.

7. Das Magnetkopfgleitstück nach einem jeden der vorangehenden Ansprüche, bei dem die genannte Schutzschicht weiter eine Maskierungsschicht (28) umfaßt, die auf der hydrierten Kohlenstoffschicht (26) abgeschieden wird.

8. Das Magnetkopfgleitstück nach Anspruch 7, bei dem die Maskierungsschicht eine Siliziumverbindung ist.

9. Das Magnetkopfgleitstück nach Anspruch 8, bei dem die genannte Siliziumverbindung SiOₓ ist.

10. Das Magnetkopfgleitstück nach Anspruch 7 bis 9, bei dem die Maskierungsschicht etwa 5 nm dick ist.

11. Eine Datenspeichereinrichtung mit einem Magnetkopfgleitstück nach einem jeden der vorangehenden Ansprüche.

12. Eine Methode zur Herstellung eines Magnetkopfgleitstücks (10) für ein magnetisches Aufzeichnungssystem, wobei das genannte Gleitstück eine Luftlagerfläche (19) aufweist und die genannte Methode folgende Schritte umfaßt:
Abscheiden einer Schutzschicht (22) auf der genannten Luftlagerfläche des genannten Gleitstücks, wobei die genannte Schutzschicht eine weniger als 50 nm dicke Adhäsionsschicht (24) und eine Schicht aus amorphem hydriertem Kohlenstoff (26) umfaßt;
Bilden einer Struktur aus mindestens einer Schiene (12, 14) auf der genannten Luftlagerfläche durch Abtragen von Material von der genannten Luftlagerfläche bis zu einer bestimmten Tiefe in den Bereichen (18) der genannten Luftlagerfläche außerhalb der genannten Schiene(n); und
Beibehalten der genannten Schutzschicht auf den (der) genannten Schiene(n).

13. Die Methode zur Herstellung eines Magnetkopfgleitstücks nach Anspruch 12, bei der die Dicke der genannten Adhäsionsschicht zwischen 1-5 nm (10-50 Ångström) liegt.

14. Die Methode zur Herstellung eines Maqnetkopfqleitstücks nach Anspruch 12 oder 13, bei der die Dicke der genannten Schicht aus amorphem hydriertem Kohlenstoff zwischen 5 und 100 nm (50-1000 Ångström) liegt.

15. Die Methode zur Herstellung eines Magnetkopfgleitstücks nach einem der Ansprüche 12 bis 14, bei der die genannte Adhäsionsschicht Silizium umfaßt.

16. Die Methode zur Herstellung eines Magnetkopfgleitstücks nach einem der Ansprüche 12 bis 15, bei der die Dicke der genannten Schutzschicht unter 25 nm (250 Ångström) liegt.

17. Die Methode zur Herstellung eines Magnetkopfgleitstücks nach einem der Ansprüche 12 bis 16, bei der der genannte Schritt der Bildung einer Schienenstruktur ein Ätzverfahren umfaßt.

18. Die Methode zur Herstellung eines Magnetkopfgleitstücks nach Anspruch 17, bei der das genannte Ätzverfahren das reaktive Ionenätzen umfaßt.

19. Die Methode zur Herstellung eines Magnetkopfgleitstücks nach einem der Ansprüche 12 bis 18, bei der der genannte Abscheidungsschritt weiter das Abscheiden einer Maskierungsschicht (28) auf der Schicht aus hydriertem Kohlenstoff umfaßt.

20. Die Methode zur Herstellung eines Magnetkopfgleitstücks
nach Anspruch 19, weiter umfassend den Schritt, in dem das strukturierte Gleitstück einem Sauerstoffätzverfahren unterzogen wird, um die Oberflächeneigenschaften der Maskierungsschicht zu verändern.

21. Die Methode zur Herstellung eines Magnetkopfgleitstücks nach Anspruch 19, bei der der genannte Abscheidungsschritt weiter das Abscheiden einer zweiten Schicht aus amorphem hydriertem Kohlenstoff auf der Maskierungsschicht umfaßt, wobei die zweite Schicht dicker ist, als die erste Schicht aus amorphem hydriertem Kohlenstoff (26), wobei die genannte dickere Schicht aus amorphem hydriertem Kohlenstoff durch das Sauerstoffätzverfahren abgetragen wird.

## Revendications

1. Coulisse de tête magnétique (10) ayant une surface de palier d'air (19) avec une zone à motifs (12, 14) sur celle-ci, ladite zone à motifs ayant un revêtement protecteur (22),
ladite coulisse étant caractérisée en ce que ledit revêtement est composé d'une couche d'adhésion (24) d'au plus 50 nm d'épaisseur et d'une couche de carbone hydrogéné amorphe (26).

2. Coulisse de tête magnétique selon la revendication 1, où ladite zone à motifs comprend au moins un rail (12).

3. Coulisse de tête magnétique la revendication 1 ou 2, où ladite couche d'adhésion est à base de silicium.

4. Coulisse de tête magnétique selon l'une quelconque des revendications précédentes, où l'épaisseur de la couche d'adhésion est comprise entre 1 et 5 nm (10 et 50 angströms).

5. Coulisse de tête magnétique selon l'une quelconque des revendications précédentes, où l'épaisseur de ladite couche de carbone hydrogéné amorphe est comprise entre 5 et 100 nm.

6. Coulisse de tête magnétique selon l'une quelconque des revendications précédentes, où l'épaisseur du dit revêtement protecteur est inférieure à 25 nm (250 angströms).

7. Coulisse de tête magnétique selon l'une quelconque des revendications précédentes, où ledit revêtement protecteur comprend, de plus, une couche de masquage (28) déposée sur la couche de carbone hydrogéné amorphe (26).

8. Coulisse de tête magnétique selon la revendication 7, où la couche de masquage est un composé de silicium.

9. Coulisse de tête magnétique selon la revendication 8, où ledit composé de silicium est SiOₓ.

10. Coulisse de tête magnétique selon l'une quelconque des revendications 7 à 9, où la couche de masquage a une épaisseur d'environ 5 nm.

11. Dispositif de mémorisation de données comprenant une coulisse de tête magnétique selon l'une quelconque des revendications précédentes.

12. Procédé pour fabriquer une coulisse de tête magnétique (10) pour un système d'enregistrement magnétique, ladite coulisse ayant une surface de palier d'air (19), ledit procédé comprenant les étapes consistant à :
déposer un revêtement protecteur (22) sur ladite surface de palier d'air de ladite coulisse, ledit revêtement protecteur comprenant une couche d'adhésion (24) d'au plus 50 nm d'épaisseur et une couche de carbone hydrogéné amorphe (26) ;
former un motif d'au moins un rail (12, 14) sur ladite surface de palier d'air en supprimant de la matière de ladite surface de palier d'air jusqu'à une profondeur choisie dans des zones (18) de ladite surface de palier d'air autres que ledit ou les dits rail(s) ; et
maintenir ledit revêtement protecteur sur ledit ou les dits rail(s).

13. Procédé pour fabriquer une coulisse de tête magnétique selon la revendication 12, où l'épaisseur de ladite couche d'adhésion est comprise entre 1 et 5 nm (10 et 50 angströms).

14. Procédé pour fabriquer une coulisse de tête magnétique selon la revendication 12 ou 13, où l'épaisseur de ladite couche de carbone hydrogéné amorphe est comprise entre 5 et 100 nm (50 et 1.000 angströms).

15. Procédé pour fabriquer une coulisse de tête magnétique selon l'une quelconque des revendications 12 à 14, où ladite couche d'adhésion est à base de silicium.

16. Procédé pour fabriquer une coulisse de tête magnétique selon l'une quelconque des revendications 12 à 15, où l'épaisseur du dit revêtement protecteur est inférieure à 25 nm (250 angströms).

17. Procédé pour fabriquer une coulisse de tête magnétique selon l'une quelconque des revendications 12 à 16, où ladite étape consistant à former un motif de rails consiste en un processus d'attaque chimique.

18. Procédé pour fabriquer une coulisse de tête magnétique selon la revendication 17, où ledit processus d'attaque chimique consiste en un processus d'attaque par ions réactifs.

19. Procédé pour fabriquer une coulisse de tête magnétique selon l'une quelconque des revendications 12 à 18, où ladite étape de dépôt comprend, de plus, l'étape consistant à déposer une couche de masquage (28) sur la couche de carbone hydrogéné.

20. Procédé pour fabriquer une coulisse de tête magnétique selon la revendication 19 comprenant, de plus, l'étape consistant à soumettre la coulisse à motifs à un processus d'attaque à l'oxygène pour modifier les caractéristiques surfaciques de la couche de masquage.

21. Procédé pour fabriquer une coulisse de tête magnétique selon la revendication 19, où ladite étape de dépôt comprend, de plus, l'étape consistant à déposer une deuxième couche de carbone hydrogéné amorphe sur la couche de masquage, ladite deuxième couche étant plus épaisse que la première couche de carbone hydrogéné amorphe (26), ladite couche de carbone hydrogéné amorphe plus épaisse étant éliminée au cours du processus d'attaque à l'oxygène.
